Europäisches Patentamt

European Patent Office

Office européen des brevets

(11) Veröffentlichungsnummer: **0 480 420 A2**

# (12) EUROPÄISCHE PATENTANMELDUNG

(21) Anmeldenummer: **91117291.4**

(22) Anmeldetag: **10.10.91**

(51) Int. Cl.5: **C08K 13/02**, C08L 27/18, C08L 23/02, //(C08K13/02,3:22, 5:02),(C08L23/02,27:18)

(30) Priorität: **11.10.90 DE 4032315**

(43) Veröffentlichungstag der Anmeldung: **15.04.92 Patentblatt 92/16**

(84) Benannte Vertragsstaaten: **AT BE CH DE DK ES FR GB GR IT LI LU NL SE**

(71) Anmelder: **ALVEO AG Bruchstrasse 67/69 CH-6003 Luzern(CH)**

(72) Erfinder: **van Utteren, Tom Lindenlaan 14 NL-6077 CM St. Odilienberg(NL)**

(74) Vertreter: **Strehl, Schübel-Hopf, Groening Maximilianstrasse 54 Postfach 22 14 55 W-8000 München 22(DE)**

(54) **Flammschutz-Formulierung für organische Polymere und ihre Verwendung zur Herstellung von brandfesten Polyolefin-Zusammensetzungen.**

(57) Eine Flammschutz-Formulierung für eine Polymerzusammensetzung, enthaltend
eine halogenhaltige organische Verbindung als Flammschutzmittel (A),
eine Antimonverbindung als synergistischen Wirkstoff (B), wobei das Verhältnis der halogenhaltigen organischen Verbindung (A) zu der Antimonverbindung (B) im Bereich von 1 : 1 bis 10 : 1 liegt, und
ein Polytetrafluorethylen-Homopolymeres und/oder
Copolymeres (C) in einer Menge von 2 bis 60 Gew.-%, bezogen auf die Gesamtmenge von A, B und C.

EP 0 480 420 A2

Die Erfindung betrifft eine Flammschutz-Formulierung für organische Polymere, die zusätzlich zu einem herkömmlichen Flammschutzmittel noch Polytetrafluorethylen- Homo- und/oder -Copolymere enthält, wodurch eine deutlich erhöhte Flammbeständigkeit von Kunststoffen erzielt wird.

Kunststoffe werden in zunehmendem Maße auf vielen Anwendungsgebieten eingesetzt, da sie je nach Zusammensetzung unterschiedliche Eigenschaften aufweisen und somit leicht speziell an den jeweiligen Verwendungszweck angepaßt werden können, z.B. für Haushalts- und Industriezwecke oder im Bauwesen. Jedoch sind viele Kunststoffe, darunter auch häufig eingesetzte, wie Polyethylen, Polypropylen etc. relativ leicht entflammbar, wodurch ihre allgemeine Verwendbarkeit stark eingeschränkt ist. Es wurden schon zahlreiche Möglichkeiten vorgeschlagen, derartige Polymere flammfest auszurüsten. Übliche Flammschutzmittel, die den Polymeren zugesetzt werden, enthalten Halogene. Beispiele dafür sind organische Bromverbindungen, wie Tetrabrombisphenol A, Tetrabromphthalsäureanhydrid, Decabrombiphenyl, Decabrombiphenylether oder Dibromneopentylglycol. Bekannt sind ferner Phosphorverbindungen, z.B. Phosphine, Phosphinoxide, Phosphorsäureester etc., wobei der Grad der erzielten Flammbeständigkeit maßgeblich von der eingesetzten Menge des Flammschutzmittels abhängt. Es hat sich jedoch gezeigt, daß mit zunehmendem Gehalt an Flammschutzmittel eine Verschlechterung der Eigenschaften, wie der Verarbeitbarkeit, der mechanischen Festigkeit, der Elastizität einhergeht. Um die erforderliche Menge Flammschutzmittel bei gleichbleibender Flammbeständigkeit verringern zu können und damit auch die Beeinträchtigung der Eigenschaften zu vermeiden, werden üblicherweise synergistisch wirkende Verbindungen zugesetzt. Für halogenhaltige Flammschutzmittel haben sich insbesondere Antimonverbindungen, wie Antimontrioxid, als Synergisten bewährt.

Doch ist die auf herkömmliche Weise erzielbare Flammbeständigkeit häufig nicht ausreichend. So ist es bisher nicht möglich, mit herkömmlichen Flammschutzmitteln auch in Verbindung mit Synergisten, ausreichend brandgeschützte Schaumstoffteile herzustellen, wie sie speziell für den Hoch- und Tiefbau und für Rohrisolationszwecke gebraucht werden.

Der Erfindung liegt daher die Aufgabe zugrunde, eine Flammschutz-Formulierung für normalerweise brennbare Kunststoffe zur Verfügung zu stellen, mit der gegenüber herkömmlichen Flammschutzmitteln eine deutlich verbesserte Flammbeständigkeit bei Kunststoffen erzielt werden kann.

Überraschenderweise hat sich gezeigt, daß die zusätzliche Verwendung von Polytetrafluorethylen-Homo- und/oder -Copolymeren zusammen mit einem herkömmlichen Flammschutzmittel und einem Synergisten Kunststoffen gegenüber der Verwendung des herkömmlichen Flammschutzmittels ohne Polytetrafluorethylenzusatz eine deutlich erhöhte Flammbeständigkeit verleiht.

Gegenstand der Erfindung ist somit eine Flammschutz-Formulierung für eine Polymerzusammensetzung, enthaltend

eine halogenhaltige organische Verbindung als Flammschutzmittel (A),

eine Antimonverbindung als synergistischen Wirkstoff (B), wobei das Verhältnis der halogenhaltigen organischen Verbindung (A) zu der Antimonverbindung (B) im Bereich von 1 : 1 bis 10 : 1, vorzugsweise im Bereich von 1,5 : 1 bis 5 : 1 liegt, und

ein Polytetrafluorethylen-Homopolymer und/oder Copolymer (C) in einer Menge von 2 bis 60 Gew.-%, bezogen auf die Gesamtmenge von A, B und C.

Gegenstand der Erfindung ist außerdem die Verwendung der erfindungsgemäßen Flammschutzformulierung in einer Polyolefinzusammensetzung, insbesondere in einem Polyolefinschaum, sowie ein Polyolefinschaum, der die erfindungsgemäße Flammschutz-Formulierung enthält.

Als halogenhaltige organische Flammschutzmittel (A) werden Verbindungen mit einem Halogengehalt von 40 bis 90 % eingesetzt. Besonders bewährt haben sich für die Verwendung in der erfindungsgemäßen Flammschutz-Formulierung organische Bromverbindungen, z.B. Bis-tetrabromphthalimid, Bis-(tetrabromphthalimid)-ethylen, Tetrabrombisphenol-A-bis-2,3-dibrompropylether, Pentylbrombenzol-polyacrylat, Tris(2,3-dibrompropyl)-isocyanurat, Tetrabrombiphenol A, Decabrombiphenyl, Decabrombiphenylether und Gemische davon etc., wobei Decabrombiphenyl und Decabrombiphenylether bevorzugt sind.

Erfindungsgemäß ist das Flammschutzmittel (A) im jeweiligen organischen Polymer in einem Gehalt von 4 bis 25, vorzugsweise 8 bis 25 Gew.-Teilen, bezogen auf 100 Gew.-Teile Polymer, enthalten.

Als synergistisch wirkende Antimonverbindungen (B) werden Antimonoxide, insbesondere Antimontrioxid, bevorzugt. Diese werden dem Polymer in einer Menge von 1 bis 12 Gew.-Teilen, vorzugsweise von 3 bis 10 Gew.-Teilen, bezogen auf 100 Gew.-Teile Polymer, zugesetzt.

Das Verhältnis des organischen Flammschutzmittels (A) zum Synergisten (B) wird derart eingestellt, daß es im Bereich von 1 : 1 bis 10 : 1, insbesondere im Bereich von 1,5 : 1 bis 5 : 1 liegt.

Die erfindungsgemäße Flammschutz-Formulierung enthält neben den oben erwähnten Komponenten (A) und (B) zusätzlich noch Polytetrafluorethylen-Homo- und/oder -Copolymere, deren Fluorgehalt vorzugsweise im Bereich von 20 bis 76 % liegt.

2

Copolymere von Tetrafluorethylen mit anderen copolymerisierbaren Monomeren sind für die Zwecke der Erfindung geeignet, soweit ihr Fluorgehalt ausreichend hoch ist und vorzugsweise im Bereich von 20 bis 76 % liegt. Zu Beispielen für mit Tetrafluorethylen copolymerisierbare Monomere gehören Hexafluorpropylen, Hexafluorisobutylen, Ethylen, Perfluormethylvinylether, Polytrifluorchlorethylen, Vinylidenfluorid und Vinylfluorid.

Um die gewünschte erhöhte Brandbeständigkeit zu erreichen, ist es notwendig, daß das Polytetrafluorethylen-Homo- und/oder -Copolymere in der Polymerzusammensetzung in einem Gehalt von 1 bis 20, vorzugsweise 5 bis 10 Gew.-Teilen, bezogen auf 100 Gew.-Teile der Polymerzusammensetzung enthalten ist.

Die erfindungsgemäße Flammschutz-Formulierung eignet sich als Zusatz zu allen brennbaren Polymermaterialien, die einen Flammschutz erfordern, wie für Polyurethane, Polyolefine, Olefin-Copolymere.

Mit Hilfe der erfindungsgemäßen Flammschutz-Formulierung werden ausgezeichnete Ergebnisse bei Polyolefinen, speziell Polyethylen und Polypropylen erzielt, denen eine ausgezeichnete Brandbeständigkeit verliehen wird.

Die Zugabe der erfindungsgemäßen Flammschutz-Formulierung zu dem Polymer erfolgt in den Verfahrensstufen und in der Weise, in der übliche Zusätze eingemischt werden. Dies kann kontinuierlich oder anteilweise mit Hilfe von üblichen Mischvorrichtungen, wie Homogenmischern oder Extrudern erfolgen.

Die wie vorstehend beschrieben erhaltenen flammfesten Polymerzusammensetzungen können, falls erforderlich, noch Additive in den üblichen Mengen enthalten. Beispiele für Additive sind Gleitmittel, Antioxidantien, Pigmente, Stabilisatoren, Füllmittel, UV-Licht-Absorber usw.

Zudem können die Polymerzusammensetzungen gegebenenfalls mit Vernetzungsmitteln chemisch und/oder energiereichen ionisierenden Strahlen physikalisch in an sich bekannter Weise vernetzt werden. Als Vernetzungsmittel eignen sich insbesondere organische Peroxide, wie z.B. Dicumylperoxid, Dibutylperoxide, Cumolhydroperoxid, $\alpha,\alpha'$-(t-Butylperoxy)diisopropylbenzol und dergleichen. Die eingesetzte Menge richtet sich dabei nach dem gewünschten Ausmaß der Vernetzung.

Bei der für die Vernetzung eingesetzten, ionisierenden Strahlung handelt es sich um energiereiche Strahlen, wie sie üblicherweise zum Vernetzen von Kunststoffen benutzt werden, wie beispielsweise Elektronenstrahlen, Röntgenstrahlen, $\beta$-Strahlen oder $\gamma$-Strahlen. Die Dosis wird wiederum entsprechend dem gewünschten Vernetzungsgrad festgelegt.

Die erfindungsgemäße Flammschutz-Formulierung hat sich besonders zur Herstellung von flammfesten Polyolefinschaumstoffen bestens bewährt. Für die Herstellung wird der Polyolefinzusammensetzung neben den oben erwähnten Anteilen der Komponenten der Flammschutz-Formulierung und gegebenenfalls Vernetzungsmittel und/oder zusätzlichen Additiven, noch ein Treibmittel, welches unter üblichen Treibmitteln gewählt werden kann, zugesetzt. Die Menge des einzusetzenden Treibmittels richtet sich dabei nach der Menge der zugesetzten Additive inklusive der Menge der erfindungsgemäßen Flammschutz-Formulierung und Vernetzungsmittel. Üblicherweise werden jedoch 20 bis 30 Gew.-Teile Treibmittel, bezogen auf 100 Gew.-Teile Polyolefin, zugesetzt. Die Art des verwendeten Treibmittels ist dabei nicht besonders kritisch, solange die Zersetzungstemperatur des Treibmittels höher ist als mindestens die Schmelztemperatur des eingesetzten Polymers. Beispiele für geeignete Treibmittel sind Azodicarbonamid, Metallsalze von Azodicarbonamid, Hydrazodicarbonamid, 4,4'-Oxy-bis(benzolsulfonyl)-semicarbazid, Bis-benzolsulfonylhydrazid und N,N'-Dinitrosopentamethylentetramin.

Derartige flammfeste Polymerzusammensetzungen können auf herkömmliche Weise zu Schaumstoffen verarbeitet werden, wie beispielsweise in der DE-PS 27 15 804 und der DE-OS 19 47 589 beschrieben ist. Beispielsweise kann das einzusetzende Komponentengemisch durch einen Extruder oder eine Kalanderwalze bei einer Temperatur, bei der sich das Treibmittel noch nicht zersetzt, geschmolzen und geknetet und in die gewünschte Form, z.B. in eine Bahnform gebracht werden. Anschließend wird die so erhaltene Bahn verschäumt. Soll die Bahn vor dem Verschäumen chemisch vernetzt werden, ist es zweckmäßig, Vernetzungsmittel zu verwenden, deren Zersetzungstemperatur niedriger liegt als diejenige des zugesetzten Treibmittels.

Durch Zugabe der erfindungsgemäßen Flammschutz-Formulierung, die zusätzlich zu einem herkömmlichen Flammschutzmittel und einem Antimonoxid als Synergisten noch Polytetrafluorethylen-Homo- und/oder -Copolymere enthält, zu organischen Polymeren, können Polymerzusammensetzungen, z.B. Polyolefinzusammensetzungen und Polyolefinschäume, erhalten werden, die gegenüber den üblichen, brandfest ausgerüsteten Polymerzusammensetzungen eine deutlich erhöhte Brandbeständigkeit aufweisen.

Mit der erfindungsgemäßen Flammschutz-Formulierung ausgerüstete Polymerzusammensetzungen eignen sich besonders zur Herstellung von Schaumstoffplatten und Formteilen, die auch noch bei Dicken über 20 mm eine ausgezeichnete Brandbeständigkeit aufweisen und somit auch strengste Brandbestimmungen erfüllen. Derartige Formteile lassen sich in vielen Bereichen einsetzen, beispielweise eignen sie sich zur Verwendung im Hoch- und Tiefbau für Isolier- und Dichtzwecke, wie für Rohrisolationen usw.

Die Erfindung wird durch die nachstehenden Beispiele veranschaulicht.

BEISPIELE

Mit flammfesten Polyethylenschäumen, die sich nur in der Art des jeweils zugesetzten Flammschutzmittels unterschieden, wurden Brandtests gemäß dem französischen Standard NF P 92501 durchgeführt.

Herstellung der flammfesten Polyethylenschäume

Für die Herstellung der getesteten Polyethylenschäume wurde jeweils von der folgenden Grundzusammensetzung ausgegangen:

| Polyethylen niederer Dichte | 100 Gew.-Teile |
| Stearate als Gleitmittel | 2 Gew.-Teile |

Die Art und die Menge des jeweils zugesetzten Flammschutzmittels ist aus Tabelle 1 ersichtlich.

Der Gehalt an Azodicarbonamid als Treibmittel beträgt je nach Menge der zugesetzten Additive 20 bis 30 Gew.-Teile, bezogen auf 100 Gew.-Teile Polyolefin. Die Menge wird dabei so gewählt, daß eine Verschäumung (Ausdehnung) um den Faktor 40 erreicht wird (Verschäumungszahl von 40).

Die einzelnen Bestandteile wurden in einem Extruder homogenisiert. Anschließend wurde durch eine Breitschlitzdüse eine Bahn ausgepreßt, die dann mit energiereicher Strahlung physikalisch vernetzt wurde und nachfolgend in einem Umluftofen bei über 200°C geschäumt wurde.

Die erhaltenen Polyethylenschäume wiesen ein Raumgewicht von ca. 25 kg pro $m^3$ auf und waren physikalisch vernetzt.

Aus diesen Schäumen wurden jeweils Probestücke hergestellt und an diesen Brandtests durchgeführt. Die Ergebnisse sind aus Tabelle 1 ersichtlich. Die Beispiele 1 und 2 entsprechen dabei Polyethylenschäumen mit der erfindungsgemäßen Flammschutz-Formulierung.

Wie die Ergebnisse in Tabelle 1 für die erfindungsgemäßen Beispiele zeigen, ist es mit Hilfe der erfindungsgemäßen Flammschutz-Formulierung möglich, Schaumstoffe zu erhalten, die bei Dicken ≤ 20 mm der französischen Brandschutzklasse $M_1$ und bei Dicken > 20 mm der französischen Brandschutzklasse $M_2$ entsprechen.

4

TABELLE

Tabelle 1

| Flammschutz-mittel (A) | Gehalt in Gew.-Teilen Flammschutzmittel [1] | $Sb_2O_3$ [1] | $(CF_4)_x$ [1] | $M_1$ (mm)[3] [2] | $M_2$ (mm)[3] [2] |
|---|---|---|---|---|---|
| Beispiel 1 | Decabrombi-phenyl od. Ether | 12 | 6 | 6 | ≤ 20 | > 20 |
| Beispiel 2 | " | 12 | 6 | 4 | < 15 | 15-25 |
| Vergl.-Beisp. 1 | " | 12 | 6 | - | < 12 | 12-20 |
| " 2 | " | 18 | 6 | - | ≥ 10 | - |
| " 3 | Decabrombi-phenyl od. Ether + Bis-tetrabrom-phthalimid | 6 | 6 | - | ≥ 10 | - |

1) Gehalt in Gew.-Teilen, bezogen auf 100 Gew.-Teile Polyolefin
2) Brandklassen gemäß NF P-92-501
3) Probendicke

## Patentansprüche

1. Flammschutz-Formulierung für eine Polymerzusammensetzung, enthaltend
   eine halogenhaltige organische Verbindung als Flammschutzmittel (A),
   eine Antimonverbindung als synergistischen Wirkstoff (B), wobei das Verhältnis der halogenhaltigen organischen Verbindung (A) zu der Antimonverbindung (B) im Bereich von 1 : 1 bis 10 : 1 liegt, und
   ein Polytetrafluorethylen-Homopolymeres und/oder
   Copolymeres (C) in einer Menge von 2 bis 60 Gew.-%, bezogen auf die Gesamtmenge von A, B und C.

2. Flammschutz-Formulierung nach Anspruch 1, dadurch gekennzeichnet, daß der Halogengehalt in der halogenhaltigen organischen Verbindung (A) 40 bis 90 % Gew.-% beträgt.

3. Flammschutz-Formulierung nach Anspruch 1 und 2, dadurch gekennzeichnet, daß der Fluorgehalt in dem Polytetrafluorethylen-Homopolymeren und/oder -Copolymeren (C) 20 bis 76 Gew.-% beträgt.

4. Flammschutz-Formulierung nach einem der Ansprüche 1 bis 3, dadurch gekennzeichnet, daß das Halogen in der halogenhaltigen organischen Verbindung (A) Brom ist.

5. Flammschutz-Formulierung nach einem der Ansprüche 1 bis 4, dadurch gekennzeichnet, daß die Antimonverbindung (C) ein Antimonoxid ist.

6. Flammschutz-Formulierung nach einem der Ansprüche 1 bis 5, dadurch gekennzeichnet, daß die Antimonverbindung (B) $Sb_2O_3$ ist.

7. Verwendung der Flammschutz-Formulierung nach einem der Ansprüche 1 bis 6 zum Brandschutz in einer Polyolefinzusammensetzung.

8. Verwendung der Flammschutz-Formulierung nach einem der Ansprüche 1 bis 6 zum Brandschutz in einem Polyolefinschaum.

9. Polyolefinschaum, dadurch gekennzeichnet, daß er die Flammschutz-Formulierung nach einem der Ansprüche 1 bis 6 enthält.

10. Polyolefinschaum nach Anspruch 9, dadurch gekennzeichnet, daß er auf 100 Gew.-Teile Polyolefin enthält :
1 bis 25 Gew.-Teile einer halogenhaltigen organischen Verbindung als Flammschutzmittel (A),
1 bis 12 Gew.-Teile einer Antimonverbindung als synergistischen Wirkstoff (B), und
1 bis 20 Gew.-Teile eines Polytetrafluorethylen-Homopolymeren und/oder -Copolymeren.